# EUROPEAN PATENT APPLICATION

(11) **EP 4 671 390 A1**
(43) Date of publication of application: **31.12.2025**
(21) Application number: 24788073.5
(22) Date of filing: 09.04.2024
(51) Int. Cl.: C21D 7/00, C21D 10/00, C21D 9/18, A63C 1/30

(54) **LASER SHOCK PEENING METHOD FOR ICE SKATE BLADE EDGE**

(30) Priority: 13.04.2023 CN 202310392157
(71) Applicant: Avic Manufacturing Technology Institute, Chaoyang District, Beijing 100024 (CN)
(72) Inventor: ZOU, Shikun, Beijing 100024 (CN); XU, Ming, Beijing 100024 (CN); XUE, Qingjiang, Beijing 100024 (CN); CAO, Ziwen, Beijing 100024 (CN); CUI, Xiangzhong, Beijing 100024 (CN)
(74) Representative: Bandpay & Greuter
(86) International application number: PCT/CN2024/086884
(87) International publication number: WO 2024/212971

(57) **Abstract**

The present invention relates to the field of laser processing technologies for sports equipment, and specifically to a method for laser shock peening of an ice skate blade edge. The method includes the following steps: providing an ice skate blade substrate; applying an absorption layer to the blade edge of the ice skate blade substrate, wherein the absorption layer forms a rounded R-angle transition over the chamfered area of the blade edge; performing laser shock peening treatment on the blade edge coated with the absorption layer, with the laser for laser shock peening directly incident in the normal direction; performing further laser shock peening treatment on the chamfered area of the blade edge coated with the absorption layer with the laser normal to the R-angle area, using an optical focusing enhancement method; removing the coated absorption layer after the laser shock peening treatment. The purpose of the present invention is to solve the problem of deformation and delamination that occurs easily during the laser shock peening of an ice skate blade.

## Description

### TECHNICAL FIELD

The present application relates to the field of laser processing technology for sports equipment, and specifically relates to a method for laser shock peening of an ice skate blade edge.

### BACKGROUND

The blade of an ice skate becomes extremely sharp after being sharpened. Generally, ice skate blades are made of metal materials, and they have a very narrow blade edge. The blade edge of a common ordinary ice skate blade is only 2 millimeters wide; even the blade edge of the widest figure ice skate blade does not exceed 4 millimeters, and speed skating ice skate blades are even as sharp as ordinary knives.

In addition, skaters need to sharpen the blades frequently to prevent them from becoming dull. Typically, the blade edges need to be sharpened after 20 hours of skating.

Ice skate blades can be classified into carbon tool steel, stainless steel, high-speed tool steel, powder metallurgy materials, and coated materials. Ice skate blades made of carbon tool steel are usually used by beginners. The quality of ice skate blades mainly depends on their carbon content. Although ice skate blades used in the same sport all meet the same hardness standard, due to differences in steel grades, under the same conditions, higher-grade steel allows the ice skate blade edges to maintain a longer service life.

Ice skate blades can be roughly classified into three categories according to their structure and sports characteristics: speed skating ice skate blades, figure ice skate blades, and ice hockey ice skate blades. Although the three types of ice skate blades have differences, the principle of pushing off the ice while gliding is basically similar.

Speed skating ice skate blades can be classified into long-track speed skating ice skate blades and short-track speed skating ice skate blades. Long-track speed skating ice skate blades have a long blade body, small curvature of the blade edge, a large contact area between the blade edge and the ice surface, and a large turning radius, making them suitable for long-distance sliding on long tracks. Short-track speed skating ice skate blades have a short blade body, large curvature of the blade edge, a relatively small contact area with the ice surface, and a small turning radius, making them suitable for sliding on short tracks (500m~1000m). The blade body thickness is 1.4±0.1mm, and the hardness is HRC56~60.

Figure ice skate blades can be further classified into free figure ice skate blades, figure pattern ice skate blades, and ice dance figure ice skate blades according to ice movements, blade teeth, and blade body shape. Since figure skating primarily involves jumps and spinning steps, their difference from other ice skate blades lies in the front blade teeth, which ensure that when the ice skate blade tilts forward by 10 degrees, the bottommost tooth is allowed to touch the ice surface. The blade edges are relatively thick, the blade edge thickness of ordinary-grade figure ice skate blades is not less than 3.5mm, and that of high-grade figure ice skate blades is not less than 3.8mm. Their hardness is HRC56~60, with a short blade body and large curvature of the blade edge.

Ice hockey ice skate blades are classified into goaltender ice hockey ice skate blades and player ice hockey ice skate blades. Since players often need to make sudden stops and turns during the sport, the blade body requires high strength. The blade edge thickness is 2.8±0.1mm, and the blade edge is arc-shaped, with the straight middle portion not less than 80 mm.

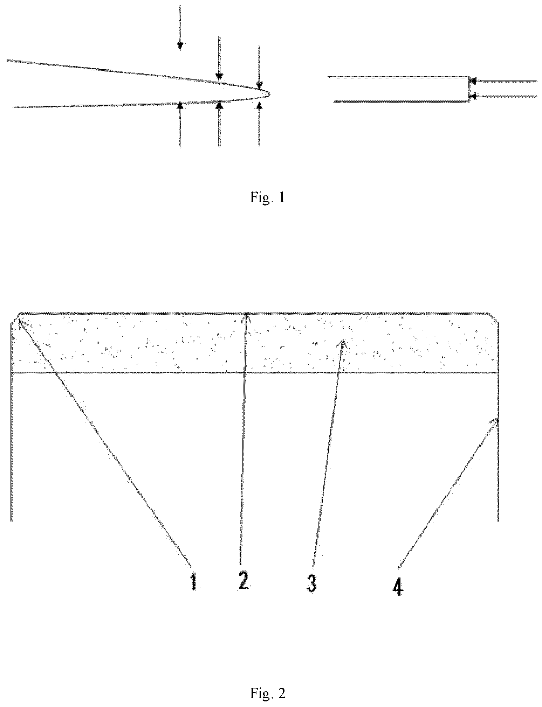

To further improve the strength, fatigue performance, and corrosion resistance of the ice skate blade, laser shock peening technology can be adopted to strengthen the blade edge. Currently, laser shock peening is widely used for the reinforcement of blade edges, which can increase the service life by 5 to 7 times, with very noticeable effects. However, the blade has a round head structure and generally adopts double-sided shock peening to enhance the high and low cycle fatigue performance and resistance to foreign object damage of the blade, as shown in Figure 1.

Similar to thin-walled structures such as blades, ice skate blades are also prone to deformation and delamination during laser shock peening. Therefore, deformation and delamination are key technologies for the laser shock peening of thin-walled structures. For blades, square-spot double-sided laser shock peening is usually adopted to avoid deformation, but simultaneous double-sided laser shock peening is more **prone to** delamination. The ice skate blade edges have an approximately right-angle structure with very small chamfer dimensions, so the laser shock peening method used for blade structures cannot be fully adopted. Therefore, it is necessary to propose a brand-new laser shock peening method for ice skate blade edges to solve the above technical problems.

### SUMMARY

### (I) Technical Problems to be Solved

The present invention mainly addresses the above issues and proposes a method for laser shock peening of an ice skate blade edge, whose object is to solve the problem of deformation and delamination that occur easily during the laser shock peening of the ice skate blade.

### (II) Technical Solution

To achieve the above object, the present invention provides a method for laser shock peening of an ice skate blade edge, including the following steps:
Providing an ice skate blade substrate;
Applying an absorption layer to the blade edge of the ice skate blade substrate, wherein an area of the absorption layer covering the chamfer of the blade edge is a rounded R-angle transition;
Performing laser shock peening treatment on the blade edge coated with the absorption layer, with the laser for laser shock peening directly incident in the normal direction;
Performing further laser shock peening treatment on a chamfered area of the blade edge coated with the absorption layer with the laser normal to the R-angle area, using an optical focusing enhancement method;
Removing the coated absorption layer after the laser shock peening treatment.

Further, the optical focusing enhancement method includes using a short-focal-length lens or a reflector to focus so as to perform laser shock peening treatment on the chamfered area.

Further, the optical focusing enhancement method includes using multiple overlapping laser pulses to perform laser shock peening treatment on the chamfered area.

Further, the absorption layer is an aluminum or silver coating.

Further, the material of the ice skate blade substrate is stainless steel, titanium alloy, high-carbon steel, alloy steel, or a composite material.

Further, the absorption layer is prepared by physical vapor deposition, magnetron sputtering, or electroplating.

Further, the thickness of the absorption layer is 0.5 µm to 20 µm.

Further, the laser shock peening treatment uses a pulsed laser, with a laser power ranging from 500W to 2000W.

Further, the coated absorption layer is removing using a chemical solution or a mechanical grinding method.

### (III) Beneficial Effects

By applying an absorption layer to the blade edge to enhance the laser shock peening effect, in the laser shock peening process, if a laser beam is directly used to strengthen the chamfered area, the energy distribution of the laser beam on the chamfered area is relatively uniform, making it difficult to achieve precise processing and strengthening of the chamfered area, which results in a relatively weak strengthening effect at the chamfered part. To enhance the strengthening effect of the chamfered area, the present invention uses optical focusing technology in the chamfered area-specifically, focusing with a lens or reflector, or adopting multiple laser beam irradiations-to improve the strengthening effect of the chamfered part. Thereby, laser shock peening of the top surface of the blade edge is achieved, deformation and delamination are avoided, and at the same time, improvements in residual compressive stress, fatigue performance, and corrosion resistance are obtained.

### BRIEF DESCRIPTION OF THE DRAWINGS

Fig. 1 is a structural schematic diagram of a laser shock peening method for blades and ice skate blades disclosed in the background of the present application.
Fig. 2 is a schematic diagram of a cross-sectional structure of a blade edge disclosed in the present application.
Fig. 3 is a structural schematic diagram of the laser shock peening of the end face of a blade edge disclosed in the present application.
Fig. 4 is a structural schematic diagram of further laser shock peening of an R-angle area disclosed in the present application.

Reference signs shown in the figures: 1. Chamfer; 2. End face of the blade edge; 3. Ideal residual compressive stress zone from laser shock peening; 4. Side face of the blade edge; 5. Absorption layer.

### DETAILED DESCRIPTION

The specific implementations of the present invention will be described in further detail below in conjunction with the accompanying drawings and embodiments. The following embodiments are intended to illustrate the present invention but are not intended to limit the scope of the present invention.

An embodiment of the present invention provides a method for laser shock peening of an ice skate blade edge, including the following steps:
S100: Providing an ice skate substrate;
S200: Applying an absorption layer to the blade edge of the ice skate blade substrate, wherein the area of the absorption layer covering the chamfer of the blade edge is a rounded R-angle transition;
S300: Performing laser shock peening treatment on the blade edge coated with the absorption layer, with the laser for laser shock peening directly incident in the normal direction;
S400: Performing further laser shock peening treatment on the chamfered area of the blade edge coated with the absorption layer with the laser normal to the R-angle area, using an optical focusing enhancement method;
S500: Removing the coated absorption layer after the laser shock peening treatment.

Fig. 2 is a schematic diagram of the ice skate blade edge. Chamfer 1 has a very small size, usually only tens of microns, so this part is almost equivalent to a right angle. End face 2 of the blade edge is the contact surface where the ice skate blade contacts the ice surface and bears the weight of the moving person. Ideal residual compressive stress zone 3 from laser shock peening places both the end face of the blade edge and the chamfered area in the residual compressive stress zone. Side face 4 of the blade edge bears friction and pressure from the ice surface during turning.

Therefore, the end face of the blade edge is a key area. In the laser shock peening process, when a laser beam is directly used to strengthen the chamfered area, the energy distribution of the laser beam on the chamfered area is relatively uniform, making it difficult to achieve precise processing and strengthening of the chamfered area, which results in a relatively weak strengthening effect at the chamfered part.

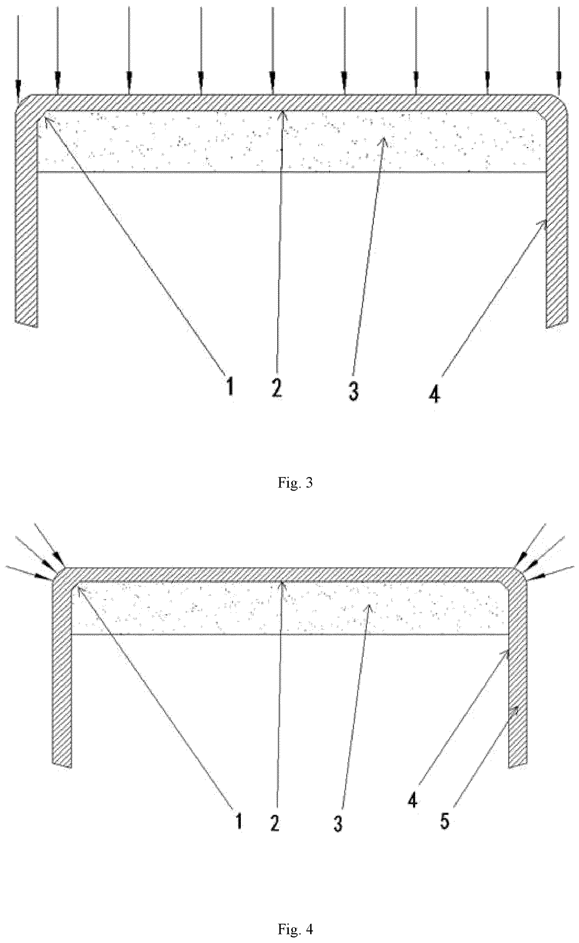

To enhance the strengthening effect of the chamfered area, as shown in Fig. 3, in the present embodiment, an absorption layer 5 is applied to the blade edge (including chamfer 1, end face 2 of the blade edge, and side face 4 of the blade edge). This absorption layer can absorb laser energy and convert it into thermal energy, thereby enhancing the effect of laser shock and the depth of peening. Aluminum or silver coating is commonly used absorption layer materials, with good thermal conductivity and chemical stability. Among them, the absorption layer 5 applied to the chamfer 1 has a rounded R-angle transition. In the laser shock peening process, first, the end face 2 of the blade edge is strengthened by laser shock peening, with the laser for laser shock peening directly incident in the normal direction; then, the chamfered area is further strengthened in the coated edge R-angle area (see Fig. 4). In the chamfered area, optical focusing technology is used to further improve the strengthening effect of the chamfered part, thereby achieving laser shock peening of the top surface of the blade edge, avoiding deformation and delamination, while obtaining an increase in residual compressive stress, fatigue performance, and corrosion resistance.

In some embodiments, using the optical focusing method to improve the strengthening effect of the chamfered part includes the following:
1. Focusing the laser beam with a small-focal-length lens or reflector can concentrate the energy of the laser beam in the chamfered area, forming a high-energy-density laser beam, thereby achieving precise processing and strengthening of the chamfered area. This can enhance the strengthening effect of the chamfered part and improve the durability and stability of ice skate blades used in ice sports;
2. Using multiple laser shock peening treatments to gradually improve the strengthening effect of the chamfered part through a cumulative effect.

These methods can be used alone or in combination to achieve the goal of improving the strengthening effect of the chamfered part. For example, the laser for laser shock peening is directly incident in the normal direction, and then the chamfered area is further strengthened in the coated edge R-angle area (see Fig. 4). For laser shock peening of the R-angle area, a small-focal-length lens or reflector is used for focusing. Since the shock waves from laser shock peening propagate inward in the normal direction to the part surface, a focusing effect of the shock waves is formed, which greatly enhances the laser shock peening effect at the chamfered position. After laser shock peening, the coated absorption layer is removed.

In some implementations, generally, other unmentioned optical focusing enhancement methods are not particularly limited. For example, a higher-power laser may be used to increase energy density, or the shape of the laser beam may be adjusted to make it closer to the shape of the chamfered part, thereby achieving better matching with the shape of the chamfered part.

In some embodiments, the types of materials that can be used as the ice skate blade substrate include but are not limited to: stainless steel, titanium alloy, high-carbon steel, alloy steel, or composite materials. These materials all have high strength and corrosion resistance, so they can be used to manufacture high-performance ice skate blades.

In the present embodiment, a method for preparing the absorption layer 5 includes but is not limited to: physical vapor deposition, magnetron sputtering, or electroplating. These methods can all be used to form a thin-layer absorption material on the surface of the blade edge to absorb laser energy and improve the effect of laser shock peening.

Preferably, the thickness of the absorption layer 5 ranges from 0.5 to 20 micrometers. The selection of this range can balance the relationship between the thickness of the absorption layer 5 and the cutting performance of the ice skate blade.

Preferably, the pulsed laser power used in the laser shock peening treatment ranges from 500W to 2000W. Laser pulses within this power range can provide sufficient energy in a short time to form high-temperature and high-pressure areas on the surface of the blade edge, thereby strengthening the blade edge.

In addition, the present embodiment also provides a method for removing the coated absorption layer 5, including the use of chemical solutions or mechanical grinding methods. These methods can effectively remove the absorption layer 5 to ensure that the cutting performance of the ice skate blade is not affected.

To further disclose the nature of the present invention, the following examples provide a detailed description of the strengthening method of the present invention. It should be understood that the present invention is not limited by the specific conditions or details stated in these examples, except for these limitations specifically stated in the appended claims.

### Example 1

An ice skate blade made of stainless steel was placed in a vacuum chamber. A physical vapor deposition method was used to deposit a 5-µm-thick aluminum layer on the blade edge as the absorption layer 5. The aluminum layer had good coverage on the chamfer 1 area of the blade edge, forming a rounded R-angle transition, and its shape matched the shape of the blade edge in other areas. Next, a laser with a power of 500W was directly incident on the end face of the blade edge 2 in the normal direction for laser shock peening treatment. Subsequently, the laser was incident on the R-angle in the normal direction to further strengthen the chamfer 1 area; before the laser was incident on the R-angle, a focusing lens was used to focus a pulsed laser beam onto the chamfer 1 area of the blade edge. After the treatment, a chemical solution was used to remove the aluminum layer, thereby obtaining the final product of the ice skate blade after laser shock peening treatment. By comparing the hardness and wear resistance before and after the experiment, it can be found that the treated ice skate blade exhibits better performance and a longer service life.

### Example 2

1.Preparing the ice skate blade substrate: Select stainless steel as the material for the ice skate blade substrate, process and manufacture it according to design requirements to form the ice skate blade edge;
2.Applying the absorption layer: Select magnetron sputtering to prepare the aluminum absorption layer 5, uniformly cover it on the blade edge, and form a rounded R-angle transition in the chamfer 1 area of the blade edge;
3. Laser shock peening treatment: Use a pulsed laser with a power of 1000W and a wavelength of 1064nm. Perform laser shock peening on the end face 2 of the blade edge in the normal direction. Subsequently, use a lens with a focal length of 50mm to perform laser shock peening on the R-angle area, with each point being repeatedly shocked 10 times and each shock duration being 10 milliseconds;
4. Removing the absorption layer 5: Use a chemical solution to thoroughly remove the absorption layer 5 covering the blade edge to ensure the smoothness and finish of the blade edge.

The ice skate blade edge treated by the above method has higher hardness, wear resistance, and impact resistance, and can better meet the requirements of ice sports.

### Example 3

1. Preparing the ice skate blade substrate: Select stainless steel as the material for the ice skate blade substrate, perform processing and polishing to obtain an ice skate blade substrate with a blade edge;
2. Applying the absorption layer 5: Use the physical vapor deposition method to plate a 5-micron-thick silver-plated layer on the end face 2 of the blade edge, the side face 4 of the blade edge, and the area of chamfer 1 to form the absorption layer 5. Among them, the absorption layer 5 located in the area of chamfer 1 is processed to form a rounded R-angle transition;
3. Optical focusing enhancement: First, perform laser shock peening on the end face 2 of the blade edge by means of normal incidence. Subsequently, use a reflector to focus so as to further perform laser shock peening on the R-angle area. Before performing the further laser shock peening, the ice skate is placed in a dedicated fixture so that the chamfered area of the blade edge faces the reflector. With the help of the reflector, the incident angle and position of the laser can be precisely controlled, thereby concentrating the laser energy on the chamfered area. In addition, use multiple overlapping laser pulses to perform laser shock peening on the chamfered area and the area of the end face 2 of the blade edge to improve the strengthening effect;
4. Removing the absorption layer 5: Clean the surface of the blade edge using a chemical solution to completely remove the silver coating and restore the original surface state.

The ice skate blade edge of the present embodiment achieves laser shock peening of the top surface of the blade edge through a flat-top additional absorption layer, avoiding deformation and delamination, while obtaining improvements in residual compressive stress, fatigue performance, and corrosion resistance.

The above descriptions are only preferred embodiments of the present invention. It should be pointed out that for those of ordinary skill in the technical field, several improvements and modifications can be made without departing from the technical principles of the present invention, and these improvements and modifications should also be regarded as the protection scope of the present invention.

## Claims

1. A method for laser shock peening of an ice skate blade edge, **characterized in that** it comprises the following steps:
providing an ice skate blade substrate;
applying an absorption layer to the blade edge of the ice skate blade substrate, wherein an area of the absorption layer covering a chamfer of the blade edge is a rounded R-angle transition;
performing laser shock peening treatment on the blade edge coated with the absorption layer, using a laser for laser shock peening directly incident in the normal direction;
performing further laser shock peening treatment on a chamfered area of the blade edge coated with the absorption layer with the laser normal to the R-angle area, using an optical focusing enhancement method; and
removing the coated absorption layer after the laser shock peening treatment.

2. The method for laser shock peening of an ice skate blade edge according to claim 1, **characterized in that** the optical focusing enhancement method comprises using a short-focal-length lens or a reflector to focus so as to perform the laser shock peening treatment on the chamfered area.

3. The method for laser shock peening of an ice skate blade edge according to claim 1 or 2, **characterized in that** the optical focusing enhancement method comprises using multiple overlapping laser pulses to perform laser shock peening treatment on the chamfered area.

4. The method for laser shock peening of an ice skate blade edge according to claim 1, **characterized in that** the absorption layer is an aluminum or silver coating.

5. The method for laser shock peening of an ice skate blade edge according to claim 1, **characterized in that** the material of the ice skate blade substrate is stainless steel, titanium alloy, high-carbon steel, alloy steel, or a composite material.

6. The method for laser shock peening of an ice skate blade edge according to claim 1, **characterized in that** the absorption layer is prepared by physical vapor deposition, magnetron sputtering, or electroplating.

7. The method for laser shock peening of an ice skate blade edge according to claim 1, **characterized in that** the thickness of the absorption layer is 0.5 µm to 20 µm.

8. The method for laser shock peening of an ice skate blade edge according to claim 1, **characterized in that** the laser shock peening treatment uses a pulsed laser with a power ranging from 500W to 2000W.

9. The method for laser shock peening of an ice skate blade edge according to claim 1, **characterized in that** the coated absorption layer is removed using a chemical solution or a mechanical grinding method.
